# EUROPEAN PATENT APPLICATION

(11) **EP 4 842 095 A1**
(43) Date of publication of application: **18.11.2026**
(21) Application number: 24916046.6
(22) Date of filing: 11.01.2024
(51) Int. Cl.: H04W 72/04

(54) **CARRIER ACTIVATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN)
(74) Representative: RGTH
(86) International application number: PCT/CN2024/071884
(87) International publication number: WO 2025/147973

(57) **Abstract**

A carrier activation method and apparatus, a carrier receiving method and apparatus, and a device and a storage medium, which relate to the technical field of communications. The carrier activation method comprises: a network device sending on a first carrier an activation command to a terminal device, wherein the activation command is used for activating a second carrier, and the terminal device sending a CSI report regarding the second carrier, wherein a time unit for the terminal device to receive the activation command is a first time unit, a time unit for the terminal device to send the CSI report is not later than a second time unit, and the time interval between the first time unit and the second time unit is related to at least one of the following: the timing between a downlink data transmission and an ACK feedback, the period of time within which CSI reporting is processed, and the period of time within which the terminal device parses and executes the activation command. In the method, since AGC, time-domain synchronization and frequency-domain synchronization processes are omitted during carrier activation, unnecessary time spent on the above processes is saved on, and the delay of CSI reporting is shortened, thereby shortening the time for carrier activation.

## Description

### TECHNICAL FIELD

Embodiments of the present application relate to the field of communication technologies, more specifically, to a carrier activation method, a carrier activation apparatus, a device, and a storage medium.

### BACKGROUND

Carrier activation refers to the enabling of a specific carrier in a network, so that a terminal device can use the carrier to perform data transmission and communication.

In related technologies, a carrier activation procedure may include two stages: parsing an activation command and activating a target carrier, where the target carrier refers to a carrier to be activated. In the stage of parsing the activation command, a terminal device receives an activation command for the target carrier transmitted by a network device and parses the activation command, which ensures that the terminal device receives and understands the activation command, so as to perform the subsequent target carrier activation operation. In the stage of activating the target carrier, the terminal device needs to perform automatic gain control (AGC), time-domain synchronization, frequency-domain synchronization, and channel state information (CSI) reporting. The CSI reporting refers to the terminal device reporting a CSI report for the target carrier to the network device.

In the above method, because AGC, time-domain synchronization, and frequency-domain synchronization need to be performed in the stage of activating the target carrier, the time for CSI reporting is delayed, thereby extending the activation time for the target carrier.

### SUMMARY

Embodiments of the present application provide a carrier activation method, a carrier activation apparatus, a device, and a storage medium. The technical solutions are as follows.

According to one aspect of the embodiments of the present application, a carrier activation method is provided, and the method includes:
receiving, by a terminal device, an activation command on a first carrier, where the activation command is used to activate a second carrier; and
transmitting, by the terminal device, a channel state information (CSI) report for the second carrier, where a time unit in which the terminal device receives the activation command is a first time unit, a time unit in which the terminal device transmits the CSI report is no later than a second time unit, and a time interval from the first time unit to the second time unit is related to at least one of:
   a timing between a downlink data transmission and an acknowledgement (ACK) feedback;
   a processing time for CSI reporting; or
   a time in which the terminal device parses and executes the activation command.

According to one aspect of the embodiments of the present application, a carrier activation method is provided, and the method includes:
transmitting, by a network device, an activation command to a terminal device on a first carrier, where the activation command is used to activate a second carrier, and the activation command is received by the terminal device in a first time unit; and
receiving, by the network device, a channel state information (CSI) report for the second carrier transmitted by the terminal device in a third time unit, where the third time unit is no later than a second time unit, and a time interval from the first time unit to the second time unit is related to at least one of:
   a timing between a downlink data transmission and an acknowledgement (ACK) feedback;
   a processing time for CSI reporting; or
   a time in which the terminal device parses and executes the activation command.

According to one aspect of the embodiments of the present application, a carrier activation apparatus is provided, and the apparatus includes:
a receiving module, configured to receive an activation command on a first carrier, where the activation command is used to activate a second carrier; and
a transmitting module, configured to transmit a channel state information (CSI) report for the second carrier, where a time unit in which a terminal device receives the activation command is a first time unit, a time unit in which the terminal device transmits the CSI report is no later than a second time unit, and a time interval from the first time unit to the second time unit is related to at least one of:
   a timing between a downlink data transmission and an acknowledgement (ACK) feedback;
   a processing time for CSI reporting; or
   a time in which the terminal device parses and executes the activation command.

According to one aspect of the embodiments of the present application, a carrier activation apparatus is provided, and the apparatus includes:
a transmitting module, configured to transmit an activation command to a terminal device on a first carrier, where the activation command is used to activate a second carrier, and the activation command is received by the terminal device in a first time unit; and
a receiving module, configured to receive a channel state information (CSI) report for the second carrier transmitted by the terminal device in a third time unit, where the third time unit is no later than a second time unit, and a time interval from the first time unit to the second time unit is related to at least one of:
   a timing between a downlink data transmission and an acknowledgement (ACK) feedback;
   a processing time for CSI reporting; or
   a time in which the terminal device parses and executes the activation command.

According to one aspect of the embodiments of the present application, a communication device is provided. The communication device includes a processor and a memory. The memory stores a computer program thereon, and the processor executes the computer program to implement the above carrier activation method. The communication device is a terminal device, or the communication device is a network device.

According to one aspect of the embodiments of the present application, a computer-readable storage medium is provided. The storage medium stores a computer program thereon, and the processor executes the computer program to implement the above carrier activation method.

According to one aspect of an embodiment of the present application, a chip is provided. The chip includes a programmable logic circuitry and/or program instructions. The chip, when executed, is configured to implement the above carrier activation method.

According to one aspect of the embodiments of the present application, a computer program product is provided. The computer program product includes computer instructions. The computer instructions are stored in a computer-readable storage medium, and a processor reads the computer instructions from the computer-readable storage medium and executes the computer instructions, to implement the above carrier activation method.

The technical solutions provided by the embodiments of the present application may include the following beneficial effects.

Since the carrier activation procedure only considers at least one of a timing between a downlink data transmission and an ACK feedback, a processing time for CSI reporting, or a time in which the terminal device parses and executes the activation command, the time consumed by other unnecessary steps included in the carrier activation procedure, such as AGC, time-domain synchronization, and frequency-domain synchronization steps, is avoided. This reduces the delay of CSI reporting, thereby shortening the carrier activation time.

### BRIEF DESCRIPTION OF THE DRAWINGS

FIG. 1 is a schematic diagram of a network architecture provided by an embodiment of the present application.
FIG. 2 is a flowchart of a carrier activation method provided by embodiments of the present application.
FIG. 3 is a schematic diagram of a terminal carrier aggregation example provided by embodiments of the present application.
FIG. 4 is a schematic diagram of a carrier activation procedure provided by an embodiment of the present application.
FIG. 5 is a block diagram of a carrier activation apparatus provided by an embodiment of the present application.
FIG. 6 is a block diagram of a carrier activation apparatus provided by another embodiment of the present application.
FIG. 7 is a schematic structural diagram of a terminal device provided by an embodiment of the present application.
FIG. 8 is a schematic structural diagram of a network device provided by an embodiment of the present application.

### DETAILED DESCRIPTION

To make the objectives, technical solutions, and advantages of the present application clearer, the embodiments of the present application will be described in further detail below with reference to the accompanying drawings.

The network architecture and service scenarios described in the embodiments of the present application are intended to illustrate the technical solutions of the embodiments of the present application more clearly, and do not constitute a limitation on the technical solutions provided by the embodiments of the present application. Those of ordinary skill in the art would understand that with the evolution of network architectures and the emergence of new service scenarios, the technical solutions provided by the embodiments of the present application are also applied to similar technical problems.

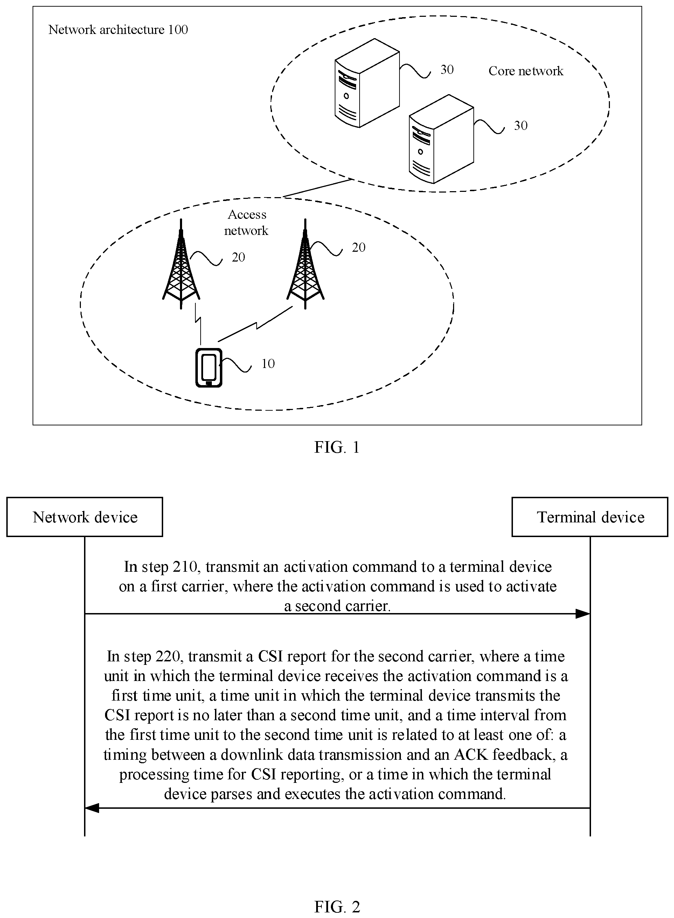

Please refer to FIG. 1, which illustrates a schematic diagram of a network architecture 100 provided by an embodiment of the present application. The network architecture 100 may include: a terminal device 10, access network devices 20, and core network elements 30.

The terminal device 10 may be referred to as a user equipment (UE), an access terminal, a user unit, a user station, a mobile station, a mobile platform, a remote station, a remote terminal, a mobile device, a wireless communication device, a user agent, or a user apparatus. In some embodiments, the terminal device 10 may also be a cellular phone, a cordless phone, a session initiation protocol (SIP) phone, a wireless local loop (WLL) station, a personal digital assistant (PDA), a handheld device with wireless communication capabilities, a computing device, other processing devices connected to a wireless modem, an in-vehicle device, a wearable device, a terminal device in 5th generation system (5GS), or a terminal device in a future evolved public land mobile network (PLMN), or the like, which is not limited in the embodiments of the present application. For convenience of description, the above devices are collectively referred to as a terminal device. The number of terminal device 10 is usually multiple, and one or more terminal devices 10 may be distributed within each cell managed by the access network device 20. The terminal device may also be simply referred to as a terminal or UE, and those skilled in the art can understand its meaning.

The access network device 20 is a device deployed in an access network to provide wireless communication functions for the terminal device 10. The access network device 20 may include various forms of macro base stations, micro base stations, relay stations, access points, etc. In systems using different radio access technologies, the name of the device with the functions of the access network device may be various. For example, in a 5G NR system, it is referred to as gNodeB or gNB. With the evolution of communication technology, the name "access network device" may change. For convenience of description, in the embodiments of the present application, the above apparatuses that provide wireless communication functions for the terminal device 10 are collectively referred to as the access network device. In some embodiments, a communication relationship may be established between the terminal device 10 and the core network element 30 via the access network device 20. For example, in a long term evolution (LTE) system, the access network device 20 may be an evolved universal terrestrial radio access network (EUTRAN) or one or more eNodeBs in the EUTRAN. In a 5G NR system, the access network device 20 may be a radio access network (RAN) or one or more gNBs in the RAN. In the embodiments of the present application, the "network device" may be referred to as the access network device 20, such as a base station, unless otherwise specified.

The core network element 30 is a network element deployed in a core network. The main functions of the core network element 30 are to provide user connections, manage users, and support service bearers, serving as a bearer network that provides interfaces to external networks. For example, the core network element in a 5G NR system may include network elements such as an access and mobility management function (AMF) entity, a user plane function (UPF) entity, and a session management function (SMF) entity.

In some embodiments, the access network device 20 and the core network element 30 communicate with each other through an over-the-air technology, e.g., an NG interface in a 5G NR system. The access network device 20 and the terminal device 10 communicate with each other through the over-the-air technology, e.g., a Uu interface.

The "5G NR system" in the embodiments of the present application may also be referred to as a 5G system or an NR system, but those skilled in the art can understand its meaning. The technical solutions described in the embodiments of the present application may be applied to LTE systems, and may also be applied to the 5G NR system, and may also be applied to subsequent evolution systems of the 5G NR system (such as a beyond 5G (B5G) system, a sixth-generation mobile communication system (6th generation system, 6G system), and may further be applied to other communication systems, e.g., a narrow band Internet of Things (NB-IoT) system, which is not limited in the present application.

In the embodiments of the present application, the network device may provide services for a cell, and the terminal device communicates with the network device through transmission resources (e.g., frequency-domain resources, or referred to as spectrum resources) on a carrier used by the cell. The cell may be a cell corresponding to the network device (e.g., a base station). The cell may belong to a macro base station, and may also belong to a base station corresponding to a small cell. The small cell may include: a metro cell, a micro cell, a pico cell, a femto cell, etc. These small cells are characterized by small coverage and low transmission power, and are suitable for providing high-speed data transmission services.

Please refer to FIG. 2, which illustrates a flowchart of a carrier activation method provided by an embodiment of the present application. The method may include at least one of steps 210 to 220.

In step 210, a network device transmits an activation command to a terminal device on a first carrier, where the activation command is used to activate a second carrier.

Correspondingly, the terminal device receives the activation command on the first carrier.

A carrier refers to a fundamental waveform or frequency used to transmit data and information in wireless communication. The first carrier refers to a carrier currently being used by the terminal device, and the second carrier refers to a carrier to be activated, where the first carrier and the second carrier are two different carriers. Carrier activation refers to starting or activating a carrier on a specific frequency to make it available for signal transmission. The activation command is used to request the terminal device to activate or start the corresponding carrier on a specified frequency or channel.

In some embodiments, the network device may transmit a medium access control control element (MAC CE) information to the terminal device, and the MAC CE information may include the above activation command.

In some embodiments, the MAC CE information may also include other control and configuration information, which is transmitted through the MAC layer and plays an important role in wireless resource allocation, scheduling, connection control, and function configuration.

In some embodiments, carrier aggregation is implemented on the basis of multiple carriers being activated. Carrier aggregation refers to simultaneously utilizing multiple different active carriers to transmit data in wireless communication, so as to increase the channel capacity and data transmission rate of the system.

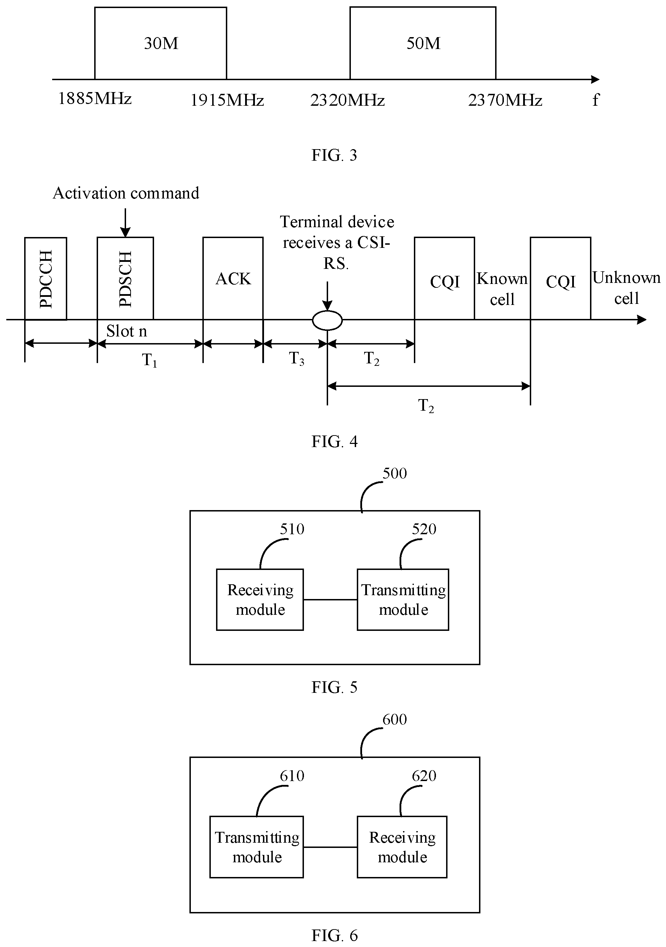

As illustrated in FIG. 3, a UE is configured with two serving cells, and the two serving cells are in an active state and have bandwidths of 30M and 50M, respectively. In this time, the maximum transmission bandwidth of the UE is equivalent to 80M. In this configuration, the UE may connect to both serving cells simultaneously and perform data transmission through the multiple carriers they provide. In this scenario, each serving cell may be regarded as a carrier that provides a specific bandwidth resource to the UE. Each serving cell may be composed of multiple carriers, and the UE may switch among multiple carriers within the same serving cell or among multiple carriers within different serving cells according to the requirements. In this manner, the UE may flexibly select and utilize the carrier resources provided by the two serving cells according to actual transmission requirements to meet its data transmission requirements to the greatest extent.

In some embodiments, the second carrier and the first carrier meet a first condition, and the first condition includes at least one of: same AGC, time-domain synchronization, frequency-domain synchronization, or sharing a same radio frequency channel.

In some embodiments, the second carrier and the first carrier both belong to a first virtual carrier.

The AGC refers to a technique that maintains a signal within a suitable range by continuously adjusting a gain of the signal. In a wireless communication system, the AGC is generally used to control the strength of the received signal to ensure that the signal may be processed and demodulated at an appropriate level. In some embodiments, same AGC refers to the AGC parameters of two carriers being the same. When the AGC parameters of two carriers are the same, it means they will perform gain control based on similar received signal strength levels to provide consistent reception performance, which is very important for implementing carrier switching and resource allocation.

The time-domain synchronization of the first carrier and the second carrier refers to ensuring clock synchronization among multiple different carriers by performing time-domain synchronization for each carrier in a wireless communication system. Specifically, each carrier has its own clock signal, and thus in a wireless communication system, it is necessary to synchronize the clock signal of each carrier, that is, to implement time-domain synchronization for each carrier. The time-domain synchronization mainly involves clock recovery at the receiving device and the time offset correction of the received signal, so as to enable the received signal to be correctly demodulated and processed. When the second carrier is time-domain synchronized with the first carrier, the second carrier may maintain synchronization with the first carrier in time.

The frequency-domain synchronization of the first carrier and the second carrier refers to ensuring frequency synchronization among multiple different carriers by performing frequency-domain synchronization for each carrier in a wireless communication system. Specifically, each carrier has its own frequency, and thus in a wireless communication system, it is necessary to synchronize the frequency of each carrier, that is, to implement frequency-domain synchronization for each carrier. The frequency-domain synchronization generally involves frequency-domain analysis and frequency offset estimation of the received signal, so as to enable the received signal to be demodulated and processed at the correct frequency. When the second carrier is frequency-domain synchronized with the first carrier, the second carrier may maintain synchronization with the first carrier in frequency.

The radio frequency channel refers to a channel or medium used to transmit and receive radio frequency signals, and is a physical medium for signal transmission in a wireless communication system, allowing wireless devices to transmit and receive wireless signals between each other. The radio frequency channel may include a wireless channel in the air or a wired channel transmitted through media such as a cable or an optical fiber. The second carrier and the first carrier sharing the same radio frequency channel means that they share the same radio frequency channel in the same frequency band, space, and time, to perform signal transmission and reception. The second carrier and the first carrier sharing the same radio frequency channel is a prerequisite for the second carrier and the first carrier having the same AGC, being time-domain synchronized, or being frequency-domain synchronized.

The virtual carrier refers to a logical carrier composed of multiple subcarriers, which is formed by uniformly dividing frequency bands of multiple physical carriers in a wireless communication system. This means that a virtual carrier may be composed of different physical carriers, and efficient resource utilization and data transmission are implemented through appropriate scheduling and allocation techniques. The first carrier and the second carrier both belonging to the first virtual carrier means that the first carrier and the second carrier are both allocated to the first virtual carrier, where the first virtual carrier refers to any virtual carrier. That is, the first carrier and the second carrier belong to the same virtual carrier, meaning they are in the same virtual carrier and may share the same modulation scheme and other transmission parameters.

In the above method, when the second carrier and the first carrier meet the first condition, for example, they meet one or more of the conditions: sharing the same radio frequency channel, same AGC, time-domain synchronization, or frequency-domain synchronization, then in the activation procedure of the second carrier, it is not necessary to perform AGC, time-domain synchronization, and/or frequency-domain synchronization operations. By avoiding the additional operations, the efficiency and performance of wireless communication may be improved, and the delay of data transmission may be reduced, thereby shortening the activation time for the second carrier.

In some embodiments, when the second carrier and the first carrier do not simultaneously meet same AGC, time-domain synchronization, and frequency-domain synchronization, the terminal device needs to perform corresponding synchronization operations, to ensure normal communication connection and data transmission. For example, when the second carrier and the first carrier meet same AGC and time-domain synchronization, the terminal device needs to perform frequency-domain synchronization. Specifically, the terminal device may ensure frequency synchronization with the first carrier by searching, estimating the frequency offset, and compensating for the frequency-domain offset of the second carrier, thereby implementing normal communication connection and data transmission. For example, when the second carrier and the first carrier meet time-domain synchronization, the terminal device needs to perform AGC and frequency-domain synchronization.

In some embodiments, in the case where the second carrier and the first carrier both belong to the first virtual carrier, the various physical carriers included in the first virtual carrier (or referred to as the same virtual carrier) meet a second condition, and the second condition includes at least one of: same AGC, time-domain synchronization, or frequency-domain synchronization.

A physical carrier refers to an actual carrier used to transmit and receive data in a communication system. The first carrier and the second carrier may be two different physical carriers. When the first carrier and the second carrier belong to the same virtual carrier, the first carrier and the second carrier meet one or more of the conditions: same AGC, time-domain synchronization, or frequency-domain synchronization.

In the above method, when the first carrier and the second carrier belong to the same virtual carrier, similarly, the terminal device does not need to perform AGC, time-domain synchronization, and frequency-domain synchronization operations. By avoiding the additional operations, the activation time for the second carrier is shortened.

In some embodiments, the network device transmits configuration information to the terminal device, and the configuration information is used to indicate that the second carrier and the first carrier meet the first condition or both belong to the first virtual carrier.

Correspondingly, the terminal device receives the configuration information.

The configuration information refers to relevant parameters and configurations used to indicate that the second carrier and the first carrier meet the first condition or both belong to the first virtual carrier. The configuration information may include at least one of: AGC configuring parameters, time-domain synchronization parameters, frequency-domain synchronization parameters, radio frequency channel allocation parameters, or virtual carrier allocation parameters. In some embodiments, the AGC configuring parameters refer to the relevant parameters and configurations for automatic gain control, which may include parameters such as signal strength range, gain increment, and gain smoothness, to ensure that signal strength of the second carrier is consistent with signal strength of the first carrier. In some embodiments, the time-domain synchronization parameters refer to parameters such as clock synchronization and timing configuration, to ensure that the second carrier and the first carrier may be received and demodulated at the correct time-domain positions. In some embodiments, the frequency-domain synchronization parameters refer to parameters such as frequency offset correction and frequency offset compensation, to ensure that the second carrier and the first carrier may be received and demodulated at the same frequency-domain positions. In some embodiments, radio frequency channel allocation parameters may include configurations such as channel bandwidth, frequency range, and bandwidth allocation. By reasonably allocating radio frequency channels, it can ensure that the second carrier and the first carrier share the same wireless channel resources in the frequency range, avoiding interference and conflicts. In some embodiments, the virtual carrier allocation parameters may specify that the first carrier and the second carrier use the same number of subcarriers, carrier spacing, and carrier type, to ensure that they are in the same virtual carrier. With the above method, the terminal device can timely receive information about the second carrier and the first carrier meeting the first condition. In this way, when activating the second carrier, the terminal device does not need to perform AGC, time-domain synchronization, and frequency-domain synchronization operations, and directly activates the second carrier. This can improve the performance and efficiency of the wireless communication system and shorten the activation time for the second carrier.

In some embodiments, the network device transmits an activation command to the terminal device, where the activation command includes configuration information. The terminal device may timely learn that the second carrier and the first carrier meet the first condition or both belong to the first virtual carrier by parsing the activating command.

In some embodiments, the network device transmits configuration information to the terminal device separately. The terminal device may timely learn that the second carrier and the first carrier meet the first condition or both belong to the first virtual carrier by parsing the configuration information. Whether the configuration information is transmitted by being included in the activation command or by being transmitted separately, the purpose is to indicate to the terminal device that the second carrier and the first carrier meet the first condition or both belong to the first virtual carrier. The present application does not limit the transmitting manner of the configuration information.

In some embodiments, no synchronization signal block (SSB) is transmitted on the second carrier.

The terminal device performs AGC, time-domain synchronization, and frequency-domain synchronization, which generally relies on received multiple SSBs. An SSB is a periodic signal with a typical period configuration of 20 milliseconds (ms). Therefore, during the activation procedure of the second carrier, it is usually necessary to receive and parse multiple SSBs, and the activation procedure generally takes 40 ms or longer.

However, since the first carrier and the second carrier meet the first condition or both belong to the first virtual carrier, that is, the first carrier and the second carrier meet one or more of the conditions: same AGC, time-domain synchronization, frequency-domain synchronization, or sharing the same radio frequency channel, or belonging to the same virtual carrier, the SSB on the second carrier may not be transmitted in this case.

In the above method, by not transmitting the SSB on the second carrier, the time for receiving and parsing the SSB may be saved, thereby accelerating the activation procedure of the second carrier. Furthermore, omitting the SSB configuration for the second carrier can save related resource overhead.

In step 220, the terminal device transmits a CSI report for the second carrier, where a time unit in which the terminal device receives the activation command is a first time unit, a time unit in which the terminal device transmits the CSI report is no later than a second time unit, and a time interval from the first time unit to the second time unit is related to at least one of: a timing between a downlink data transmission and an ACK feedback, a processing time for CSI reporting, or a time in which the terminal device parses and executes the activation command.

Correspondingly, the network device receives the CSI report for the second carrier transmitted by the terminal device in a third time unit, where the third time unit is no later than the second time unit.

In the embodiments of the present application, the time unit in which the terminal device transmits the CSI report for the second carrier is the third time unit. The third time unit is no later than the second time unit. The third time unit being no later than the second time unit means that the third time unit is the second time unit, or the third time unit is before the second time unit. For example, if the second time unit is slot m, the third time unit may be the slot m, or may be a certain slot whose time-domain position is before slot m.

The CSI report is a report used to feed back channel state information. In a wireless communication system, the CSI report provides information about the quality and characteristics of a channel. The CSI report may include information such as a channel quality indicator (CQI) metric, a precoding matrix indicator (PMI) metric, and a rank indicator (RI) metric. The present application does not limit the content included in the CSI report.

Specifically, the CSI report for the second carrier may include at least one of: the received signal quality of the second carrier, the spectrum utilization of the second carrier, or the transmission power and interference levels of other user equipment. The received signal quality of the second carrier refers to metrics such as signal strength, signal-to-noise ratio, and bit error rate, which are used to describe the signal quality and reliability of the second carrier at the receiving end; the spectrum utilization of the second carrier is used to describe the utilization rate of the second carrier on spectrum resources and the current interference; the transmission power and interference levels of other user equipment are used to describe the interference and competition of the second carrier in a multi-user environment. The present application does not limit the information included in the CSI report.

By providing the CSI report of the second carrier to the network device, the network device may learn about the quality and characteristics of the second carrier. This information may help the network device determine whether to activate the second carrier and make corresponding adjustments and optimizations during the activation procedure. Specifically, if the CSI report illustrates that the quality of the second carrier is good and there is no major interference or problem, the network device may choose to activate the second carrier to increase the transmission rate and system capacity. Conversely, if the CSI report illustrates that the quality of the second carrier is poor, with interference or low capacity, the network device may temporarily not activate it or may adjust relevant parameters to avoid unnecessary performance degradation. Therefore, the CSI report for the second carrier can provide the network device with important information about the quality of the second carrier, which has certain guiding significance for determining whether to activate the second carrier and for optimization during the activation procedure.

In some embodiments, please refer to FIG. 4, which illustrates a schematic diagram of a carrier activation procedure provided by an embodiment of the present application. In FIG. 4, the first time unit is slot n, and the second time unit is slot n+(T₁+T₂)/t, where T₁ is the timing between the downlink data transmission and the ACK feedback, T₂ is the processing time for the CSI reporting, and t is a length of a single slot. The third time unit being no later than the second time unit means that the third time unit is no later than slot n+(T₁+T₂)/t.

The ACK feedback refers to a feedback signal that acknowledges received data, and represents whether the data has been successfully received during transmission. Specifically, the ACK feedback is used to convey to the network device the information that the terminal device has successfully received the activation command. The timing between the downlink data transmission and the ACK feedback refers to a time interval from when the network device transmits the downlink data to when the terminal device transmits the ACK feedback to the network device. Within the time interval, the network device waits to receive the ACK feedback to determine whether the data has been successfully received.

The length of the single slot refers to the time length occupied by one slot. In a wireless communication system, resources in the time domain are divided based on the length of the single slot as the fundamental unit. The length of the single slot may be various depending on the communication system. For example, in a long term evolution (LTE) communication system, the length of one slot is approximately 0.5 ms. Different slots may be allocated to different terminal devices to implement concurrent multi-user communication.

In the present application, the result of (T₁+T₂)/t represents a multiple with respect to the length of the single slot. The definitions of the first time unit and the second time unit are not limited to taking the length of the single slot as the division unit, and the present application does not limit the definition manner of the first time unit and the second time unit.

The processing procedure of CSI reporting includes three steps. First, the network device transmits a channel state information reference signal (CSI-RS) to the terminal device on the second carrier, the CSI-RS is used for mobility measurement; and then, the terminal device receives the CSI-RS transmitted on the second carrier and performs the mobility measurement based on the CSI-RS, where performing the mobility measurement based on the CSI-RS refers to the terminal device evaluating its mobility capability and channel quality using the received CSI-RS. For example, the terminal device may obtain information about the channel state and signal quality by analyzing metrics of the received CSI-RS, such as reference signal received power (RSRP), reference signal received quality (RSRQ), channel gain, and frequency offset estimation, which are not limited in the present application.

Finally, the terminal device saves the mobility measurement results based on the CSI-RS and waits for a reporting resource to transmit the mobility measurement results to the network device. The reporting resource refers to certain physical channels or channel state information available to the terminal device, and is used to transmit information such as the mobility measurement results based on the CSI-RS to the network device.

Correspondingly, based on the above processing procedure of CSI reporting, the processing time for the CSI reporting includes: the delay of the first available downlink CSI-RS, the processing time for CSI measurement, and the delay of the first available CSI reporting. The delay of the first available downlink CSI-RS refers to the time delay from when the network device transmits a CSI-RS to when the CSI-RS arrives at the terminal device. The delay includes signal transmitting time and system latency, i.e., the total time from when the network device transmits a signal to when the terminal device receives the signal. The processing time for CSI measurement refers to the time for the terminal device to process and encode the received CSI-RS. This time includes the procedures of filtering, denoising, compensating for, and encoding the collected CSI-RS. The delay of the first available CSI reporting refers to the delay from when the terminal device completes the mobility measurement based on the CSI-RS to when the terminal device can transmit the measurement results to the network device via available reporting resources. It reflects the time interval from when the terminal device completes the measurement to when the terminal device actually reports. The delay of the first available CSI reporting depends on multiple factors, including the reporting strategy of the terminal device, the network transmission delay, and the resource contention, or the like. Generally, the terminal device determines the reporting occasion based on specific policy rules and performance requirements, and the occasion may be a fixed time interval, triggered by a specific event, or determined through negotiation with the network device.

In some embodiments, the activation procedure for the second carrier is divided into two cases, as illustrated in FIG. 4: one is the case of a known cell, and the other is the case of an unknown cell. In the present application, a known cell means that the terminal device knows information of a cell where the second carrier is located, and an unknown cell means that the terminal device does not know information of a cell where the second carrier is located. When the terminal device knows the information of the cell where the second carrier is located, the activation duration for the second carrier is generally relatively short. When the terminal device does not know the information of the cell where the second carrier is located, the activation duration for the second carrier is generally relatively long.

In FIG. 4, a physical downlink control channel (PDCCH) and a physical downlink shared channel (PDSCH) are two types of physical channels used to transmit downlink data in wireless communication systems. The PDCCH is primarily used to transmit downlink control information, such as scheduling control, transmitting format control, and power control, while the PDSCH is primarily used to carry downlink user data. The terminal device receives the PDSCH transmitted by the network device in slot n, where the PDSCH includes an activation command for the second carrier. After the time T₁, the terminal device completes the ACK feedback, and after the time T₂, the terminal device completes the processing for CSI reporting. Therefore, after slot n+(T₁+T₂)/t, the second carrier may be activated, that is, the terminal device may receive and/or transmit data on the second carrier.

For example, the terminal device receives configuration information, and the configuration information indicates that the second carrier and the first carrier belong to the same virtual carrier. When the second carrier and the first carrier belong to the same virtual carrier, they have the same AGC, they are time-domain synchronized, and they are frequency-domain synchronized. The terminal device receives the activation command for the second carrier in slot n on the first carrier, and the terminal device will transmit a valid CSI report no later than slot n+(T₁+T₂)/t. T₁ is the timing between the downlink data transmission and the ACK feedback, T₂ is the processing time for the CSI reporting, and t is a length of a single slot. For example, if T₁ is indicated as k₁ via downlink control information (DCI), the delay k₂ of the first available downlink CSI-RS relative to the ACK feedback time may be obtained based on the CSI-RS configuration, the processing time for the CSI reporting is determined as k₃ based on the processing capability of the terminal device, and the delay of the first available CSI reporting relative to the processing completion of CSI reporting is determined as k₄ based on the CSI reporting resource configuration. Assuming the length of the single slot is 1ms, then after slot n+(k₁+k₂+k₃+k₄)/1ms, the terminal device transmits a valid CSI report, and the second carrier is activated, that is, the terminal device may receive and/or transmit data on the second carrier.

For example, the terminal device reports virtual carrier information, or the virtual carrier information is defined by a protocol. The second carrier and the first carrier belong to the same virtual carrier, the first carrier and second carrier within the virtual carrier share the same radio frequency channel, have the same AGC, are time-domain synchronized, and are frequency-domain synchronized. Similarly, the terminal device receives the activation command for the second carrier in slot n on the first carrier, and the terminal device will transmit a valid CSI report no later than slot n+(T₁+T₂)/t. For example, if T₁ is indicated as k₁ via DCI, the delay k₂ of the first available downlink CSI-RS relative to the ACK feedback time may be obtained based on the CSI-RS configuration, the processing time for the CSI reporting is determined as k₃ based on the processing capability of the terminal device, and the delay of the first available CSI reporting relative to the processing completion of CSI reporting is determined as k₄ based on the CSI reporting resource configuration. Assuming the length of the single slot is 1ms, then after slot n+(k₁+k₂+k₃+k₄)/1ms, the terminal device transmits a valid CSI report, and the second carrier is activated, that is, the terminal device can receive and/or transmit data on the second carrier.

In some embodiments, the first time unit is slot n, and the second time unit is slot n+(T₁+T₂+T₃)/t, where T₁ is the timing between the downlink data transmission and the ACK feedback, T₂ is the processing time for the CSI reporting, T₃ is the time in which the terminal device parses and executes the activation command, and t is a length of a single slot.

As illustrated in FIG. 4, T₃ represents the time in which the terminal device parses and executes the activation command. The terminal device parsing and executing the activation command refers to a procedure where the terminal device, after receiving an activation command from the network device, parses and executes the activation command, where the activation command generally needs to be processed at the MAC layer of the terminal device. Specifically, after receiving the activation command, the terminal device first needs to parse the activation command to obtain the relevant information included in the command, such as the frequency and mode of the second carrier to be activated. After parsing is completed, the terminal device will perform corresponding operations according to the instructions in the activation command, including enabling or disabling specific wireless resources, or starting or stopping the second carrier. The time in which the terminal device parses and executes the activation command refers to the time required to complete the parsing and execution operations.

In FIG. 4, the terminal device receives the PDSCH transmitted by the network device in slot n, where the PDSCH includes an activation command for the second carrier. After the time T₁, the terminal device completes the ACK feedback. After the time T₃, the terminal device completes parsing and executing the activation command. After the time T₂, the processing for CSI reporting is completed. Therefore, after slot n+(T₁+T₂+T₃)/t, the second carrier may be activated, that is, the terminal device may receive and/or transmit data on the second carrier.

For example, the terminal device receives configuration information, and the configuration information indicates that the second carrier and the first carrier belong to the same virtual carrier. When the second carrier and the first carrier belong to the same virtual carrier, they have the same AGC, are time-domain synchronized, and are frequency-domain synchronized. The terminal device receives the activation command for the second carrier in slot n on the first carrier, and the terminal device will transmit a valid CSI report no later than slot n+(T₁+T₂+T₃)/t. For example, if T₁ is indicated as k₁ via DCI, the delay k₃ of the first available downlink CSI-RS relative to the ACK feedback time may be obtained based on the periodic CSI-RS configuration, the processing time for the CSI reporting is determined as k₄ based on the processing capability of the terminal device, and the delay of the first available CSI reporting relative to the processing completion of CSI reporting is determined as k₅ based on the CSI reporting resource configuration. Assuming the length of the single slot is 1ms, then after slot n+(k₁+k₂+k₃+k₄+k₅)/1ms, the terminal device transmits a valid CSI report, and the second carrier is activated, that is, the terminal device may receive and/or transmit data on the second carrier.

For example, the terminal device reports virtual carrier information, or the virtual carrier information is defined by a protocol. The second carrier and the first carrier belong to the same virtual carrier, the first carrier and second carrier within the virtual carrier share the same radio frequency channel, have the same AGC, are time-domain synchronized, and are frequency-domain synchronized. The terminal device receives the activation command for the second carrier in slot n on the first carrier, and the terminal device will transmit a valid CSI report no later than slot n+(T₁+T₂+T₃)/t. For example, if T₁ is indicated as k₁ via DCI, the delay k₃ of the first available downlink CSI-RS relative to the ACK feedback time may be obtained based on the periodic CSI-RS configuration, the processing time for the CSI reporting is determined as k₄ based on the processing capability of the terminal device, and the delay of the first available CSI reporting relative to the processing completion of CSI reporting is determined as k₅ based on the CSI reporting resource configuration. Assuming the length of the single slot is 1ms, then after slot n+(k₁+k₂+k₃+k₄+k₅)/1ms, the terminal device transmits a valid CSI report, and the second carrier is activated, that is, the terminal device may receive and/or transmit data on the second carrier.

In the technical solution provided by the present application, since the carrier activation procedure only considers at least one of the timing between the downlink data transmission and the ACK feedback, the processing time for the CSI reporting, or the time in which the terminal device parses and executes the activation command, the time consumed by other unnecessary steps included in the carrier activation procedure, such as AGC, time-domain synchronization, and frequency-domain synchronization steps, is avoided. This reduces the delay of CSI reporting, thereby shortening the carrier activation time.

In the above method embodiments, the technical solution of the present application has been introduced and explained solely from the perspective of the interaction between the terminal device and the network device. The steps performed by the terminal device may be implemented separately as a carrier activation method on the terminal device side, and the steps performed by the network device may be implemented separately as a carrier activation method on the network device side. Furthermore, the embodiments provided by the present application may be arbitrarily combined to form new embodiments, all of which fall within the scope of protection of the present application.

The following are apparatus embodiments of the present application, which may be used to perform the method embodiments of the present application. For details not disclosed in the apparatus embodiments of the present application, please refer to the method embodiments of the present application.

Please refer to FIG. 5, which illustrates a block diagram of a carrier activation apparatus provided by an embodiment of the present application. The apparatus has the function of implementing the above carrier activation method on the terminal device side. The functions may be implemented via hardware, and may also be implemented by executing corresponding software via hardware. The apparatus may be the above terminal device, and may also be configured in the terminal device. As illustrated in FIG. 5, the apparatus 500 may include: a receiving module 510 and a transmitting module 520.

The receiving module 510 is configured to receive an activation command on a first carrier, where the activation command is used to activate a second carrier.

The transmitting module 520 is configured to transmit a CSI report for the second carrier, where a time unit in which the terminal device receives the activation command is a first time unit, a time unit in which the terminal device transmits the CSI report is no later than a second time unit, and a time interval from the first time unit to the second time unit is related to at least one of: a timing between a downlink data transmission and an ACK feedback, a processing time for CSI reporting, or a time in which the terminal device parses and executes the activation command.

In some embodiments, the first time unit is slot n, and the second time unit is slot n+(T₁+T₂)/t, where T₁ is the timing between the downlink data transmission and the ACK feedback, T₂ is the processing time for the CSI reporting, and t is a length of a single slot.

In some embodiments, the first time unit is slot n, and the second time unit is slot n+(T₁+T₂+T₃)/t, where T₁ is the timing between the downlink data transmission and the ACK feedback, T₂ is the processing time for the CSI reporting, T₃ is the time in which the terminal device parses and executes the activation command, and t is a length of a single slot.

In some embodiments, the second carrier and the first carrier meet a first condition or both belong to a first virtual carrier, where the first condition includes at least one of: same AGC, time-domain synchronization, frequency-domain synchronization, or sharing a same radio frequency channel.

In some embodiments, in a case where the second carrier and the first carrier both belong to the first virtual carrier, respective physical carriers included in the first virtual carrier meet a second condition, and the second condition includes at least one of: same AGC, time-domain synchronization, or frequency-domain synchronization.

In some embodiments, the receiving module 510 is further configured to receive configuration information, where the configuration information is used to indicate that the second carrier and the first carrier meet the first condition or both belong to the first virtual carrier.

In some embodiments, no SSB is transmitted on the second carrier.

In some embodiments, as illustrated in FIG. 5, the apparatus 500 further includes: a processing module (not illustrated in FIG. 5).

The receiving module 510 is further configured to receive a CSI-RS transmitted on the second carrier.

The processing module is configured to perform a mobility measurement based on the CSI-RS.

In the technical solution provided by the present application, since the carrier activation procedure only considers at least one of the timing between the downlink data transmission and the ACK feedback, the processing time for the CSI reporting, or the time in which the terminal device parses and executes the activation command, the time consumed by other unnecessary steps included in the carrier activation procedure, such as AGC, time-domain synchronization, and frequency-domain synchronization steps, is avoided. This reduces the delay of CSI reporting, thereby shortening the carrier activation time.

Please refer to FIG. 6, which illustrates a block diagram of a carrier activation apparatus provided by another embodiment of the present application. The apparatus has the function of implementing the above carrier activation method on the network device side. The functions may be implemented via hardware, and may also be implemented by executing corresponding software via hardware. The apparatus may be the above network device, and may be configured in the network device. As illustrated in FIG. 6, the apparatus 600 may include: a transmitting module 610 and a receiving module 620.

The transmitting module 610 is configured to transmit an activation command to a terminal device on a first carrier, where the activation command is used to activate a second carrier, and the activation command is received by the terminal device in a first time unit.

The receiving module 620 is configured to receive a CSI report for the second carrier transmitted by the terminal device in a third time unit, where the third time unit is no later than a second time unit, and a time interval from the first time unit to the second time unit is related to at least one of: a timing between a downlink data transmission and an ACK feedback, a processing time for CSI reporting, or a time in which the terminal device parses and executes the activation command.

In some embodiments, the first time unit is slot n, and the second time unit is slot n+(T₁+T₂)/t, where T₁ is the timing between the downlink data transmission and the ACK feedback, T₂ is the processing time for the CSI reporting, and t is a length of a single slot.

In some embodiments, the first time unit is slot n, and the second time unit is slot n+(T₁+T₂+T₃)/t, where T₁ is the timing between the downlink data transmission and the ACK feedback, T₂ is the processing time for the CSI reporting, T₃ is the time in which the terminal device parses and executes the activation command, and t is a length of a single slot.

In some embodiments, the second carrier and the first carrier meet a first condition or both belong to a first virtual carrier, where the first condition includes at least one of: same AGC, time-domain synchronization, frequency-domain synchronization, or sharing the same radio frequency channel.

In some embodiments, in a case where the second carrier and the first carrier both belong to the first virtual carrier, respective physical carriers included in the first virtual carrier meet a second condition, and the second condition includes at least one of: same AGC, time-domain synchronization, or frequency-domain synchronization.

In some embodiments, the transmitting module 610 is further configured to transmit configuration information to the terminal device, where the configuration information is used to indicate that the second carrier and the first carrier meet the first condition or both belong to the first virtual carrier.

In some embodiments, no SSB is transmitted on the second carrier.

In some embodiments, the transmitting module 610 is further configured to transmit a CSI-RS to the terminal device on the second carrier, where the CSI-RS is used for mobility measurement.

In the technical solution provided by the present application, since the carrier activation procedure only considers at least one of the timing between the downlink data transmission and the ACK feedback, the processing time for the CSI reporting, or the time in which the terminal device parses and executes the activation command, the time consumed by other unnecessary steps included in the carrier activation procedure, such as AGC, time-domain synchronization, and frequency-domain synchronization steps, is avoided. This reduces the delay of CSI reporting, thereby shortening the carrier activation time.

It should be noted that, in implementing their functions, the apparatuses provided by the above embodiments are described by way of example only with the division of the various functional modules. In practical applications, the above functions may be allocated to and completed by different functional modules according to actual requirements. That is, the internal structure of the device may be divided into different functional modules to complete all or part of the above functions.

Regarding the apparatus in the above embodiments, the specific manners in which each module performs its operations has been described in detail in the related method embodiments, which will not described in detail here. For details not specified in the apparatus embodiments, reference may be made to the above method embodiments.

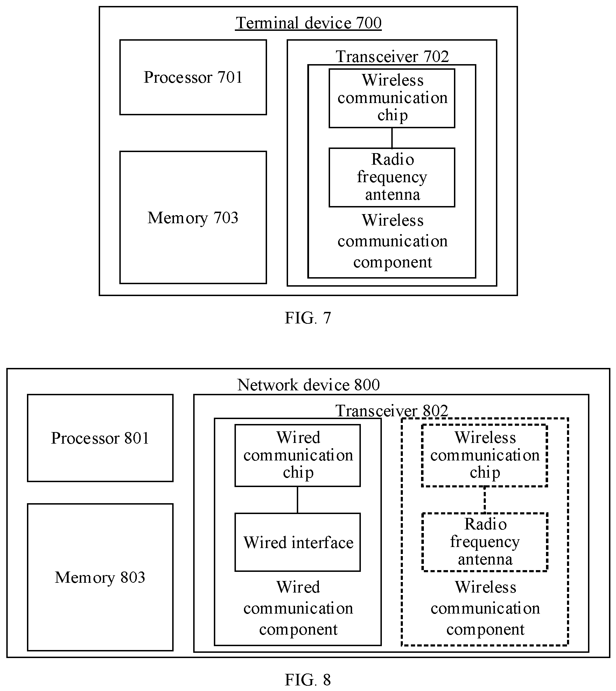

Please refer to FIG. 7, which illustrates a schematic structural diagram of a terminal device provided by an embodiment of the present application. The terminal device 700 may be configured to perform the method steps performed by the terminal device in the above embodiments. The terminal device 700 may include: a processor 701, a transceiver 702, and a memory 703. The transceiver 702 is configured to implement transmitting or receiving functions, for example, implementing the function of the above receiving module 510. The processor 701 may be configured to implement other processing functions or to control transmitting and/or receiving, for example, implementing the function of the above processing module.

The processor 701 includes one or more processing cores, and the processor 701 executes software programs and modules, to perform various functional applications and information processing.

The transceiver 702 may include a receiver and a transmitter. For example, the receiver and the transmitter may be implemented as the same wireless communication component, and the wireless communication component may include a wireless communication chip and a radio frequency antenna.

The memory 703 may be connected to the processor 701 and the transceiver 702.

The memory 703 may be configured to store computer programs executed by the processor, and the processor 701 is configured to execute the computer programs to implement the various steps in the above method embodiments.

In some embodiments, the transceiver 702 is configured to receive an activation command on a first carrier, where the activation command is used to activate a second carrier; and the transceiver 702 is configured to transmit a CSI report for the second carrier, where a time unit in which the terminal device receives the activation command is a first time unit, a time unit in which the terminal device transmits the CSI report is no later than a second time unit, and a time interval from the first time unit to the second time unit is related to at least one of: a timing between a downlink data transmission and an ACK feedback; a processing time for CSI reporting; or a time in which the terminal device parses and executes the activation command.

Please refer to FIG. 8, which illustrates a schematic structural diagram of a network device provided by an embodiment of the present application. The network device may be configured to perform the method steps performed by the network device in the above embodiments. The network device 800 may include: a processor 801, a transceiver 802, and a memory 803. The transceiver 802 is configured to implement transmitting or receiving functions, for example, implementing the function of the receiving module 620. The processor 801 may be configured to implement other processing functions or to control transmitting and/or receiving.

The processor 801 includes one or more processing cores, and the processor 801 executes software programs and modules, to perform various functional applications and information processing.

The transceiver 802 may include a receiver and a transmitter. For example, the receiver and the transmitter may be implemented as the same wireless communication component, and the wireless communication component may include a wireless communication chip and a radio frequency antenna.

The memory 803 may be connected to the processor 801 and the transceiver 802.

The memory 803 may be configured to store computer programs executed by the processor, and the processor 801 is configured to execute the computer programs to implement the various steps in the above method embodiments.

In some embodiments, the transceiver 802 is configured to transmit an activation command to a terminal device on a first carrier, where the activation command is used to activate a second carrier, and the activation command is received by the terminal device in a first time unit; and the transceiver 802 is configured to receive a CSI report for the second carrier transmitted by the terminal device in a third time unit, where the third time unit is no later than a second time unit, and a time interval from the first time unit to the second time unit is related to at least one of: a timing between a downlink data transmission and an ACK feedback; a processing time for CSI reporting; or a time in which the terminal device parses and executes the activation command.

For details not specified in the embodiment, reference may be made to the above embodiments, which will not be repeated here.

Furthermore, the memory may be implemented by any type of volatile or non-volatile storage device or a combination thereof, and the volatile or non-volatile storage device includes but is not limited to: a magnetic disk or an optical disc, an electrically erasable programmable read-only memory, an erasable programmable read-only memory, a static random-access memory, a read-only memory, a magnetic memory, a flash memory, and a programmable read-only memory.

The embodiments of the present application further provide a computer-readable storage medium, where the storage medium stores a computer program thereon. The computer program is configured to be executed by a processor to implement the above carrier activation method on the terminal device side or the above carrier activation method on the network device side. In some embodiments, the computer-readable storage medium may include a read-only memory (ROM), a random-access memory (RAM), solid state drives (SSD), or an optical disc, or the like. The random-access memory may include a resistance random access memory (ReRAM) and a dynamic random access memory (DRAM).

The embodiments of the present application further provide a chip, where the chip includes a programmable logic circuitry and/or program instructions. The chip, when executed, is configured to implement the above carrier activation method on the terminal device side or the above carrier activation method on the network device side.

The embodiments of the present application further provide a computer program product, where the computer program product includes computer instructions, and the computer instructions are stored in a computer-readable storage medium. A processor reads the computer instructions from the computer-readable storage medium and executes the computer instructions to implement the above carrier activation method on the terminal device side or the above carrier activation method on the network device side.

It should be understood that the term "indicate" mentioned in the embodiments of the present application may refer to a direct indication, an indirect indication, or represent that there is an associative relationship. For example, A indicating B may mean that A directly indicates B (e.g., B may be obtained through A), or it may mean that A indirectly indicates B (e.g., A indicates C, and B may be obtained through C), or it may mean that there is an associative relationship between A and B.

In the description of the embodiments of the present application, the term "correspond" may refer to a direct correspondence or indirect correspondence between the two, or refer to an associative relationship between the two, or refer to relationships such as indicating and being indicated, or configuring and being configured.

In some embodiments of the present application, "predefined" may be implemented by pre-storing corresponding code, table, or other means of indicating relevant information in a device (e.g., including a terminal device and a network device). The present application does not limit the specific implementation thereof. For example, the term "predefined" may refer to being defined in a protocol.

In some embodiments of the present application, the "protocol" may refer to a standard protocol in the communication field, such as an LTE protocol, an NR protocol, and related protocols applied in future communication systems, which is not limited in the present application.

As used herein, "a plurality of" refers to two or more. The term "and/or" describes an associative relationship between associated objects, which represents that there may be three relationships. For example, A and/or B may represent there are three cases: A exists alone, both A and B exist, and B exists alone. The character "/" generally indicates that the associated objects before and after this character are in an "or" relationship.

As used herein, "greater than or equal to" may represent greater than or equal to, or greater than, and "less than or equal to" may represent less than or equal to, or less than.

Furthermore, the step numbering described herein merely illustrates one possible execution sequence of the steps by way of example. In some other embodiments, the steps may not be executed in the numbered order, for example, two steps with different numbers may be executed simultaneously, or two steps with different numbers may be executed in an order opposite to that illustrated, which is not limited in the embodiments of the present application.

Those skilled in the art should appreciate that, in the above one or more examples, the functions described in the embodiments of the present application may be implemented by hardware, software, firmware, or any combination thereof. When implemented by software, these functions may be stored in a computer-readable medium or transmitted as one or more instructions or codes in the computer-readable medium. The computer-readable medium includes a computer storage medium and a communication medium, where communication medium includes any medium that facilitates the transmission of a computer program from one place to another. The storage medium may be any available medium that may be accessed by a general-purpose or special-purpose computer.

The above descriptions are merely exemplary embodiments of the present application and are not intended to limit the present application. Any modification, equivalent replacement, or improvement made within the spirit and principles of the present application should be all covered within the scope of protection of the present application.

## Claims

1. A carrier activation method, comprising:
receiving, by a terminal device, an activation command on a first carrier, wherein the activation command is used to activate a second carrier; and
transmitting, by the terminal device, a channel state information (CSI) report for the second carrier, wherein a time unit in which the terminal device receives the activation command is a first time unit, a time unit in which the terminal device transmits the CSI report is no later than a second time unit, and a time interval from the first time unit to the second time unit is related to at least one of:
a timing between a downlink data transmission and an acknowledgement (ACK) feedback;
a processing time for CSI reporting; or
a time in which the terminal device parses and executes the activation command.

2. The method according to claim 1, wherein the first time unit is slot n, and the second time unit is slot n+(T₁+T₂)/t, wherein T₁ is the timing between the downlink data transmission and the ACK feedback, T₂ is the processing time for the CSI reporting, and t is a length of a single slot.

3. The method according to claim 1, wherein the first time unit is slot n, and the second time unit is slot n+(T₁+T₂+T₃)/t, wherein T₁ is the timing between the downlink data transmission and the ACK feedback, T₂ is the processing time for the CSI reporting, T₃ is the time in which the terminal device parses and executes the activation command, and t is a length of a single slot.

4. The method according to any one of claims 1 to 3, wherein the second carrier and the first carrier meet a first condition or both belong to a first virtual carrier, and the first condition comprises at least one of:
same automatic gain control (AGC);
time-domain synchronization;
frequency-domain synchronization; or
sharing a same radio frequency channel.

5. The method according to claim 4, wherein in a case where the second carrier and the first carrier both belong to the first virtual carrier, respective physical carriers included in the first virtual carrier meet a second condition, and the second condition comprises at least one of: same AGC, time-domain synchronization, or frequency-domain synchronization.

6. The method according to claim 4 or 5, further comprising:
receiving configuration information, wherein the configuration information is used to indicate that the second carrier and the first carrier meet the first condition or both belong to the first virtual carrier.

7. The method according to any one of claims 1 to 6, wherein no synchronization signal block (SSB) is transmitted on the second carrier.

8. The method according to any one of claims 1 to 7, further comprising:
receiving a channel state information-reference signal (CSI-RS) transmitted on the second carrier; and
performing a mobility measurement based on the CSI-RS.

9. A carrier activation method, comprising:
transmitting, by a network device, an activation command to a terminal device on a first carrier, wherein the activation command is used to activate a second carrier, and the activation command is received by the terminal device in a first time unit; and
receiving, by the network device, a channel state information (CSI) report for the second carrier transmitted by the terminal device in a third time unit, wherein the third time unit is no later than a second time unit, and a time interval from the first time unit to the second time unit is related to at least one of:
a timing between a downlink data transmission and an acknowledgement (ACK) feedback;
a processing time for CSI reporting; or
a time in which the terminal device parses and executes the activation command.

10. The method according to claim 9, wherein the first time unit is slot n, and the second time unit is slot n+(T₁+T₂)/t, wherein T₁ is the timing between the downlink data transmission and the ACK feedback, T₂ is the processing time for the CSI reporting, and t is a length of a single slot.

11. The method according to claim 9, wherein the first time unit is slot n, and the second time unit is slot n+(T₁+T₂+T₃)/t, wherein T₁ is the timing between the downlink data transmission and the ACK feedback, T₂ is the processing time for the CSI reporting, T₃ is the time in which the terminal device parses and executes the activation command, and t is a length of a single slot.

12. The method according to any one of claims 9 to 11, wherein the second carrier and the first carrier meet a first condition or both belong to a first virtual carrier, and the first condition comprises at least one of:
same automatic gain control (AGC);
time-domain synchronization;
frequency-domain synchronization; or
sharing a same radio frequency channel.

13. The method according to claim 12, wherein in a case where the second carrier and the first carrier both belong to the first virtual carrier, respective physical carriers included in the first virtual carrier meet a second condition, and the second condition comprises at least one of: same AGC, time-domain synchronization, or frequency-domain synchronization.

14. The method according to claim 12 or 13, further comprising:
transmitting configuration information to the terminal device, wherein the configuration information is used to indicate that the second carrier and the first carrier meet the first condition or both belong to the first virtual carrier.

15. The method according to any one of claims 9 to 14, wherein no synchronization signal block (SSB) is transmitted on the second carrier.

16. The method according to any one of claims 9 to 15, further comprising:
transmitting a channel state information-reference signal (CSI-RS) to the terminal device on the second carrier, wherein the CSI-RS is used for a mobility measurement.

17. A carrier activation apparatus, comprising:
a receiving module, configured to receive an activation command on a first carrier, wherein the activation command is used to activate a second carrier; and
a transmitting module, configured to transmit a channel state information (CSI) report for the second carrier, wherein a time unit in which a terminal device receives the activation command is a first time unit, a time unit in which the terminal device transmits the CSI report is no later than a second time unit, and a time interval from the first time unit to the second time unit is related to at least one of:
a timing between a downlink data transmission and an acknowledgement (ACK) feedback;
a processing time for CSI reporting; or
a time in which the terminal device parses and executes the activation command.

18. The apparatus according to claim 17, wherein the first time unit is slot n, and the second time unit is slot n+(T₁+T₂)/t, wherein T₁ is the timing between the downlink data transmission and the ACK feedback, T₂ is the processing time for the CSI reporting, and t is a length of a single slot.

19. The apparatus according to claim 17, wherein the first time unit is slot n, and the second time unit is slot n+(T₁+T₂+T₃)/t, wherein T₁ is the timing between the downlink data transmission and the ACK feedback, T₂ is the processing time for the CSI reporting, T₃ is the time in which the terminal device parses and executes the activation command, and t is a length of a single slot.

20. The apparatus according to any one of claims 17 to 19, wherein the second carrier and the first carrier meet a first condition or both belong to a first virtual carrier, and the first condition comprises at least one of:
same automatic gain control (AGC);
time-domain synchronization;
frequency-domain synchronization; or
sharing a same radio frequency channel.

21. The apparatus according to claim 20, wherein in a case where the second carrier and the first carrier both belong to the first virtual carrier, respective physical carriers included in the first virtual carrier meet a second condition, and the second condition comprises at least one of: same AGC, time-domain synchronization, or frequency-domain synchronization.

22. The apparatus according to claim 20 or 21, wherein the receiving module is further configured to receive configuration information, wherein the configuration information is used to indicate that the second carrier and the first carrier meet the first condition or both belong to the first virtual carrier.

23. The apparatus according to any one of claims 17 to 22, wherein no synchronization signal block (SSB) is transmitted on the second carrier.

24. The apparatus according to any one of claims 17 to 23, further comprising: a processing module, wherein the receiving module is further configured to receive a channel state information-reference signal (CSI-RS) transmitted on the second carrier; and
the processing module is configured to perform a mobility measurement based on the CSI-RS.

25. A carrier activation apparatus, comprising:
a transmitting module, configured to transmit an activation command to a terminal device on a first carrier, wherein the activation command is used to activate a second carrier, and the activation command is received by the terminal device in a first time unit; and
a receiving module, configured to receive a channel state information (CSI) report for the second carrier transmitted by the terminal device in a third time unit, wherein the third time unit is no later than a second time unit, and a time interval from the first time unit to the second time unit is related to at least one of:
a timing between a downlink data transmission and an acknowledgement (ACK) feedback;
a processing time for CSI reporting; or
a time in which the terminal device parses and executes the activation command.

26. The apparatus according to claim 25, wherein the first time unit is slot n, and the second time unit is slot n+(T₁+T₂)/t, wherein T₁ is the timing between the downlink data transmission and the ACK feedback, T₂ is the processing time for the CSI reporting, and t is a length of a single slot.

27. The apparatus according to claim 25, wherein the first time unit is slot n, and the second time unit is slot n+(T₁+T₂+T₃)/t, wherein T₁ is the timing between the downlink data transmission and the ACK feedback, T₂ is the processing time for the CSI reporting, T₃ is the time in which the terminal device parses and executes the activation command, and t is a length of a single slot.

28. The apparatus according to any one of claims 25 to 27, wherein the second carrier and the first carrier meet a first condition or both belong to a first virtual carrier, and the first condition comprises at least one of:
same automatic gain control (AGC);
time-domain synchronization;
frequency-domain synchronization; or
sharing a same radio frequency channel.

29. The apparatus according to claim 28, wherein in a case where the second carrier and the first carrier both belong to the first virtual carrier, respective physical carriers included in the first virtual carrier meet a second condition, and the second condition comprises at least one of: same AGC, time-domain synchronization, or frequency-domain synchronization.

30. The apparatus according to claim 28 or 29, wherein the transmitting module is further configured to transmit configuration information to the terminal device, wherein the configuration information is used to indicate that the second carrier and the first carrier meet the first condition or both belong to the first virtual carrier.

31. The apparatus according to any one of claims 25 to 30, wherein no synchronization signal block (SSB) is transmitted on the second carrier.

32. The apparatus according to any one of claims 25 to 31, wherein the transmitting module is further configured to transmit a channel state information-reference signal (CSI-RS) to the terminal device on the second carrier, wherein the CSI-RS is used for a mobility measurement.

33. A communication device, comprising a processor and a memory, wherein the memory stores a computer program thereon, and the processor executes the computer program to implement the method according to any one of claims 1 to 8, or to implement the method according to any one of claims 9 to 16.

34. A computer-readable storage medium, wherein the storage medium stores a computer program thereon, and the computer program is configured to be executed by a processor, to implement the method according to any one of claims 1 to 8, or to implement the method according to any one of claims 9 to 16.

35. A chip, comprising a programmable logic circuitry and/or program instructions, wherein the chip, when executed, is configured to implement the method according to any one of claims 1 to 8, or to implement the method according to any one of claims 9 to 16.

36. A computer program product, comprising computer instructions, wherein the computer instructions are stored in a computer-readable storage medium, and a processor reads the computer instructions from the computer-readable storage medium and executes the computer instructions, to implement the method according to any one of claims 1 to 8, or to implement the method according to any one of claims 9 to 16.
